# DEMANDE DE BREVET EUROPEEN

(11) **EP 1 106 427 A1**
(43) Date de publication de la demande: **13.06.2001**
(21) Numéro de dépôt: 99450029.6
(22) Date de dépôt: 06.12.1999
(51) Int. Cl.: B60N 2/48, B60N 2/44

(54) **Appuie-tempe escamotable pour siège de passager**

(71) Demandeur: Morin, Luc, 50700 Valognes (FR)
(72) Inventeur: Morin, Luc, 50700 Valognes (FR)

(57) **Abrégé**

L'invention consiste en un appuie-tempe escamotable destiné à soutenir latéralement la tête du passager qui sommeille. L'appuie-tempe comprend :
- un dispositif de fixation (1) aux montants verticaux de l'appuie-tête connu
- un bras orientable (2) relié au dispositif (1) au moyen d'une articulation (3)
- une surface d'appui latérale externe (5).

L'orientation du bras (2) est réglable au moyen de l'articulation (3).

L'orientation de la surface d'appui (5) est réglable par rotation autour du bras (2).

La distance entre la surface d'appui (5) et le dispositif (1) est réglable par translation de la surface (5) le long du bras (2).

La surface d'appui (5) comporte une surface d'appui principal ainsi qu'un rebord antérieur et un rebord inférieur, rebords qui évitent le glissement de la tête du passager.

## Description

L'invention concerne un appuie-tête latéral escamotable pour siège de passager.

De nombreux efforts ont été faits pour améliorer le confort des passagers qui sommeillent. On connaît notamment des appuie-têtes latéraux escamotables pouvant être placés en deux positions :
- une position « éveil» dans laquelle l'appui latéral est escamoté et ne gêne pas la vision du passager
- une position « sommeil» dans laquelle l'appui latéral est en position fonctionnelle et soutient la tête du passager
(US 4 971 393, US 5 531 505, DE 30 39 934, GB 2 302 268, FR 2 689 825, JP 57 158 128, WO 98/13228, FR 2 752 548, EP 0 921 032, WO 98/32629, FR 2 768 093, JP 10 611 4 79, EP 0470 051, EP 0 780 072, FR 2 759 559) .

Les appuie-têtes latéraux escamotables connus présentent plusieurs inconvénients :
- la surface d'appui est verticale, ce qui ne permet pas l'inclinaison latérale de la tête du passager
- ils ne présentent pas de dispositif pour empêcher la tête du passager de glisser vers l'avant ou vers le bas.
- les dispositifs de réglage de la position de la surface d'appui ne permettent pas au passager de positionner la surface d'appui comme il le souhaite en fonction de sa taille et de ses habitudes de repos.

L'invention a pour but de fournir un appuie-tête latéral escamotable pourvu de moyens de réglage de la position de l'appuie-tête, en particulier de l'inclinaison latérale de l'appuie-tête et de la distance entre l'appuie-tête et le siège, et pourvu de moyens pour éviter le glissement de la tête du passager vers l'avant ou vers le bas.

Pour la compréhension du sujet, il est nécessaire de bien distinguer les appuie-têtes postérieurs connus qui équipent la plupart des véhicules et les appuie-têtes latéraux escamotables qui sont actuellement très peu diffusés.

La plupart des appuie-têtes postérieurs connus sont légèrement inclinés vers l'avant. Pour les sièges munis de ces appuie-têtes postérieurs, lorsque le passager somnole, la tête du passager a tendance à tomber vers l'avant. Pour les sièges munis de ces appuie-têtes postérieurs, l'une des positions les plus courantes de la tête du passager qui somnole comporte :
- une légère inclinaison de la tête en avant, par rotation autour d'un axe sensiblement nuqual transverse
- une légère inclinaison latérale externe de la tête , par rotation autour de l'axe nuqual antéropostérieur.
- une rotation vers l'extérieur autour de l'axe atlas-bregma.

L'appuie-tête latéral selon l'invention a été conçu pour pouvoir soutenir la tempe du passager dans différentes positions et en particulier dans la position décrite ci-dessus. Pour la commodité, l'appuie-tête latéral escamotable selon l'invention sera dénommé « appuie-tempe ». L'appuie-tempe selon l'invention est destiné à équiper les sièges de passagers, mais en aucun cas les sièges de conducteurs.

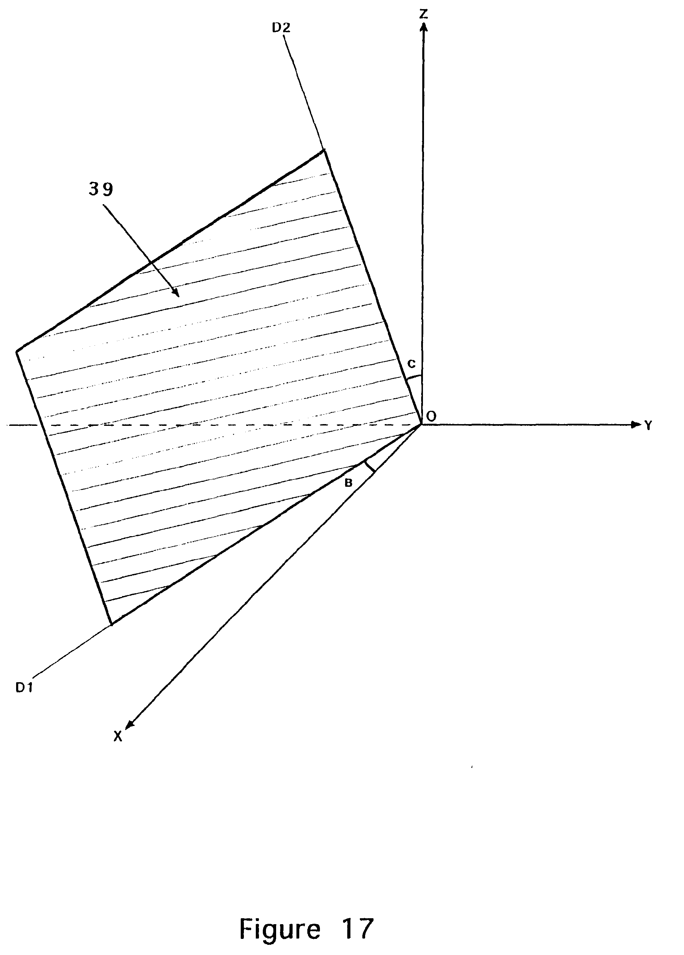

La figure 17 montre :
- l'axe Ox longitudinal du véhicule
- l'axe Oy transverse du véhicule
- l'axe Oz longitudinal du dossier
- la partie centrale (39) de la surface d'appui (5)
- la droite D1, définie comme l'intersection du plan de la surface (39), en position « sommeil », avec le plan xOy.
- la droite D2, définie comme l'intersection du prolongement du plan moyen de la surface (39), en position « sommeil », avec le plan yOz.
- l'angle B entre la droite D1 et l'axe Ox.
- l'angle C entre la droite D2 et l'axe Oz.

La valeur de l'angle B caractérise l'adaptation, en position « sommeil », de l'appuie-tempe à la rotation de la tête autour de l'axe atlas-bregma. La valeur de l'angle C caractérise l'adaptation, en position « sommeil », de l'appuie-tempe à l'inclinaison latérale de la tête, la dite inclinaison latérale se manifestant par une rotation de la tête du passager autour de l'axe nuqual antéropostérieur.

Sur les appuie-têtes latéraux escamotables connus, l'angle C est égal à zéro. Selon l'invention, l'angle C est réglable de 0 à 90 degrés, ce qui permet une meilleure adaptation de l'appuie-tempe à la position de la tête du passager qui sommeille.

Selon l'invention, l'appuie-tempe est pourvu de moyens qui, en position « sommeil », empêchent la tête du passager de glisser vers l'avant ou vers le bas. Selon l'invention, l'appuie-tempe est pourvu de moyens qui, en position « sommeil », permettent de régler la distance entre l'appuie-tempe et le dossier. Les dits moyens permettent à l'utilisateur de positionner l'appuie-tempe dans la position qu'il juge la plus confortable.

### Description d'un mode de réalisation possible de l'appuie-tempe :

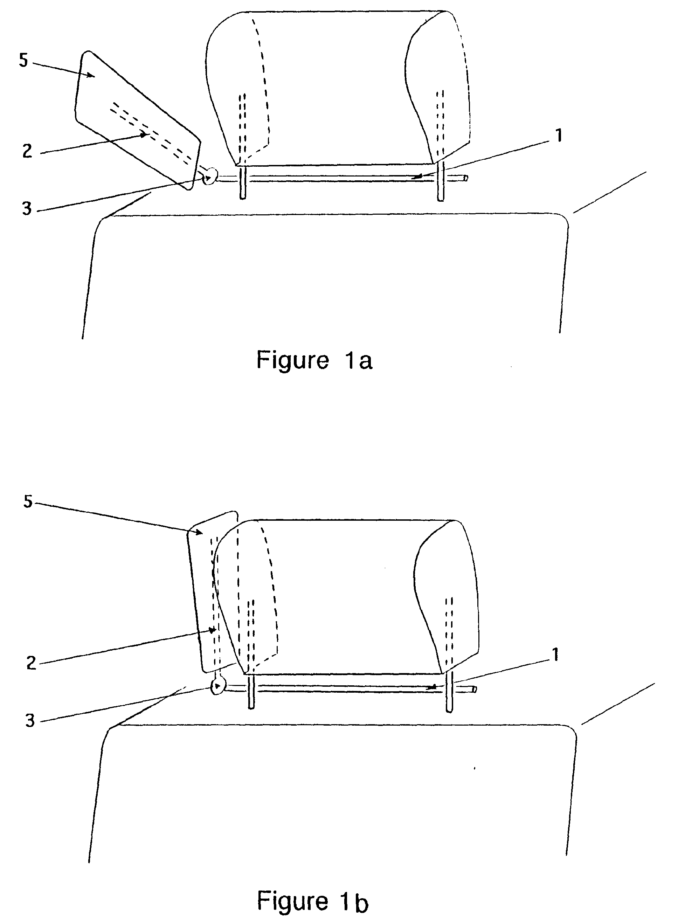

La figure la montre en perspective, vu de l'avant du véhicule, un appuie-tête postérieur muni de l'appuie-tempe, le dit appuie-tempe étant représenté en position « sommeil ». La figure 1b montre en perspective, vu de l'avant du véhicule, un appuie-tête postérieur muni de l'appuie-tempe, le dit appuie-tempe étant représenté en position « éveil ».

L'appuie-tempe selon l'invention comporte :
- un dispositif de fixation (1) au siège ou à l'appuie-tête postérieur connu
- un bras orientable (2) relié au dispositif (1) au moyen d'une articulation (3)
- un tube (4) pouvant coulisser le long du bras (2) et tourner autour du bras (2)
- une surface d'appui latérale externe (5) solidaire du tube (4).

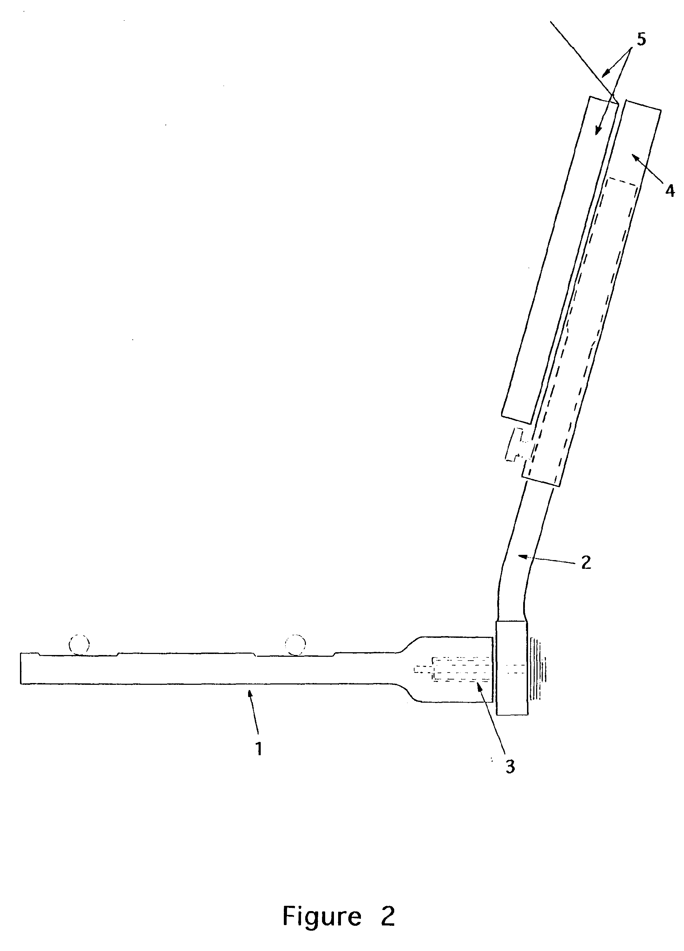

La figure 2 représente une vue supérieure de l'appuie-tempe selon l'invention :
- le bras (2) est représenté en position « sommeil ».
- un exemple de dispositif de fixation (1) est représenté schématiquement, sans les colliers de fixation qui seront décrits plus loin, dans le cas où la fixation est faite sur les montants verticaux de l'appuie-tête postérieur connu .

Pour la clarté du dessin, le tube coulissant (4) est représenté dans une position telle que la partie centrale (39) de la surface d'appui (5) soit dans un plan vertical. Pour la clarté du dessin, le matelassage (42) de la surface d'appui (5) n'est pas représenté sur la figure 2. On verra plus loin que le tube (4) peut tourner autour du bras (2), ce qui permet de régler l'inclinaison de la surface (5). On verra plus loin que le tube (4) peut coulisser le long du bras (2), ce qui permet de régler la distance entre la surface (5) et le dispositif de fixation (1).

### Description d'un exemple de dispositif de fixation (1) :

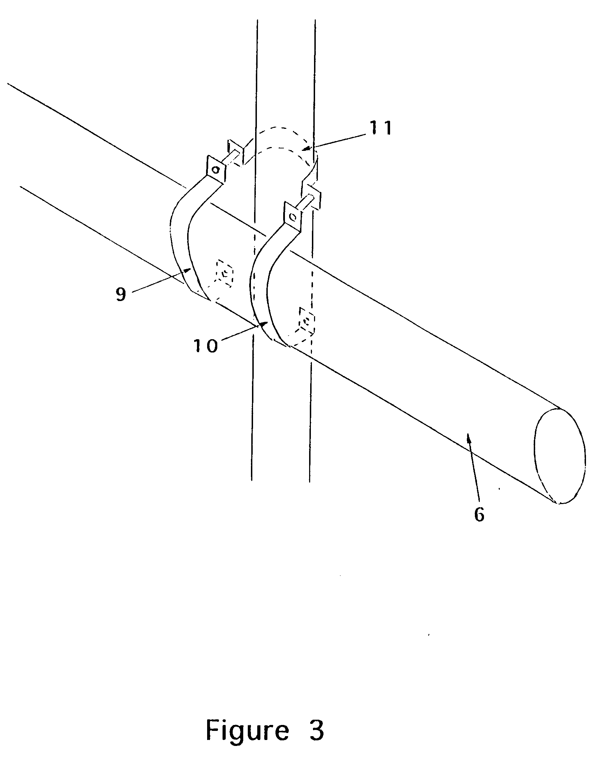

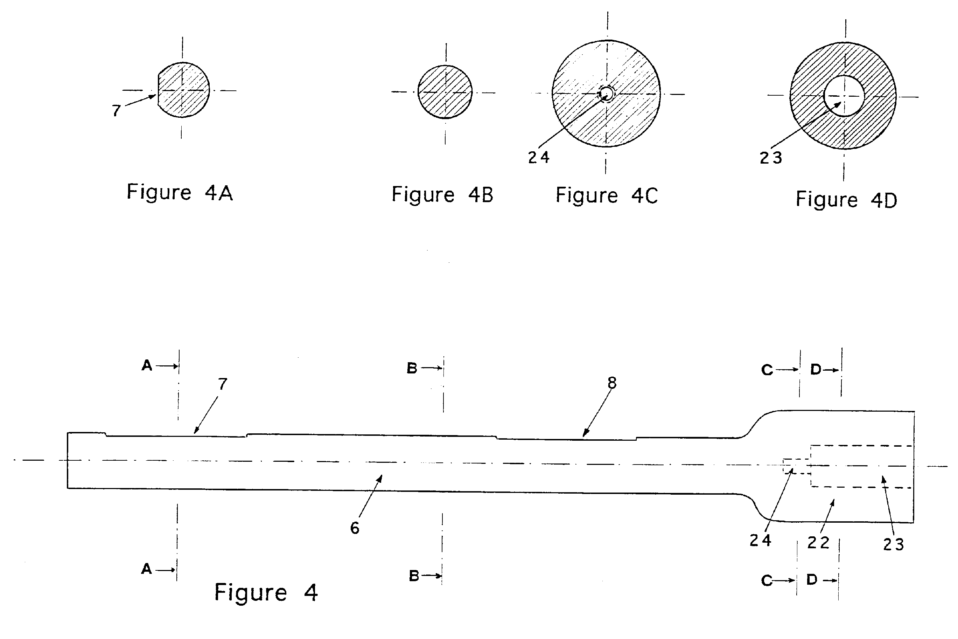

Les figures 3, 4, 5, 6 représentent un exemple de dispositif (1) de fixation de l'appuie-tempe dans le cas où l'appuie-tempe est fixé aux montants verticaux d'un appuie-tête postérieur connu. Le dispositif (1) comprend :
- une barre (6) disposée :
   + horizontalement
   + transversalement par rapport à l'axe longitudinal du véhicule
   + en arrière des montants verticaux de l'appuie-tête
- un moyen de fixation de la barre (6) aux montants verticaux , le dit moyen étant constitué par un assemblage de demi-colliers.

La figure 3 représente, schématiquement en perspective, une vue postérieure du moyen de fixation de la barre (6) à un montant vertical. Pour la clarté du dessin, le demi-collier (12) n'est pas représenté sur la figure 3.

La figure 4 représente la barre (6) en vue supérieure, ainsi que des coupes de la dite barre (6), les dites coupes se situant au niveau du méplat (7), au niveau du milieu de la barre (6), au niveau de l'orifice fileté (24) et au niveau de l'orifice (23). La barre (6) comporte sur sa face antérieure deux méplats (7) et (8). Les deux méplats (7) et (8) se trouvent en regard des faces postérieures des montants verticaux de l'appuie-tête postérieur.

La figure 5 représente, en vue supérieure, un moyen de fixation de la barre (6) à un montant vertical. La figure 6 représente, en vue latérale, un moyen de fixation de la barre (6) à un montant vertical. Le dit moyen comprend :
- deux demi-colliers (9) et (10) disposés verticalement en arrière de la barre (6)
- deux demi-colliers(11) et (12) disposés horizontalement en avant du montant vertical.

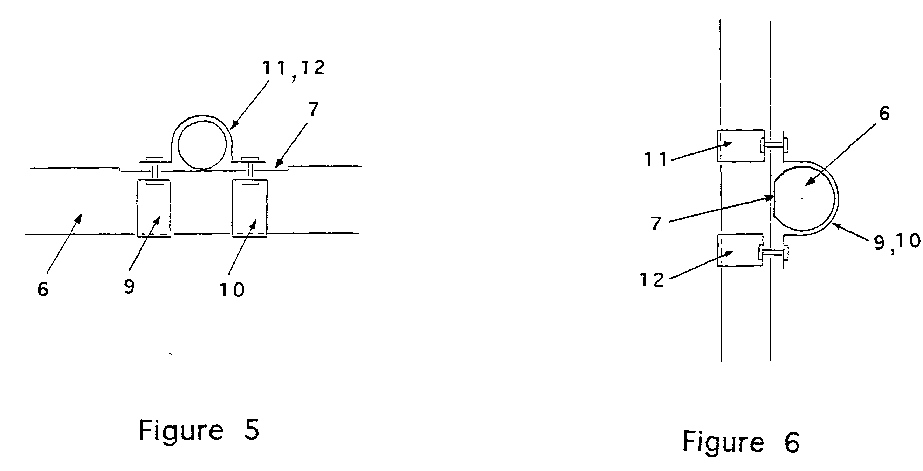

Les deux demi-colliers (9) et (10) sont solidarisés aux demi-colliers (11) et (12) au moyen de vis et d'écrous. La figure 6 représente, en vue latérale, un moyen de fixation de la barre (6) à un montant vertical. Le méplat (7) se trouve au contact du montant vertical. Les demi-colliers sont disposés verticalement en arrière de la barre (6). Les demi-colliers (11) et (12) sont disposés horizontalement en avant du montant vertical.

Ce dispositif de fixation a l'avantage de pouvoir être utilisé sur la plupart des appuie-têtes postérieurs connus.

### Description du bras orientable (2) :

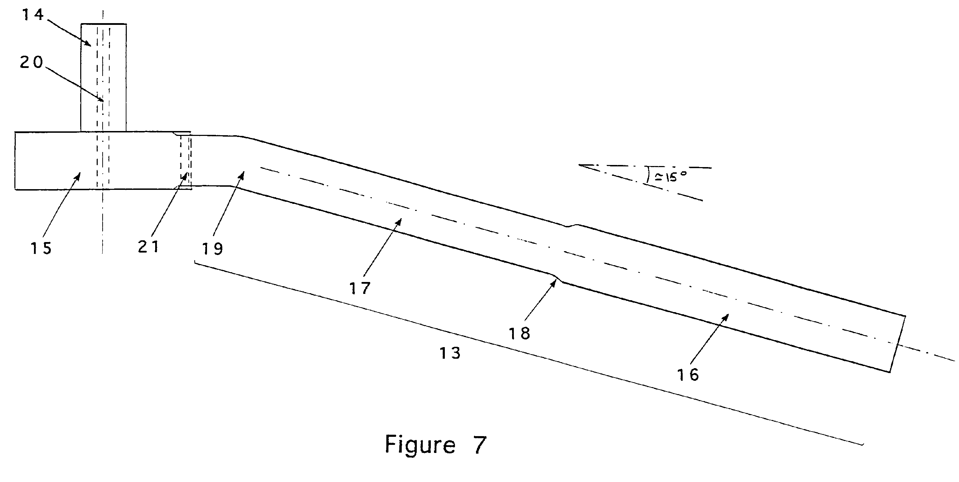

La figure 7 représente le bras (2) en position « sommeil », en vue supérieure.

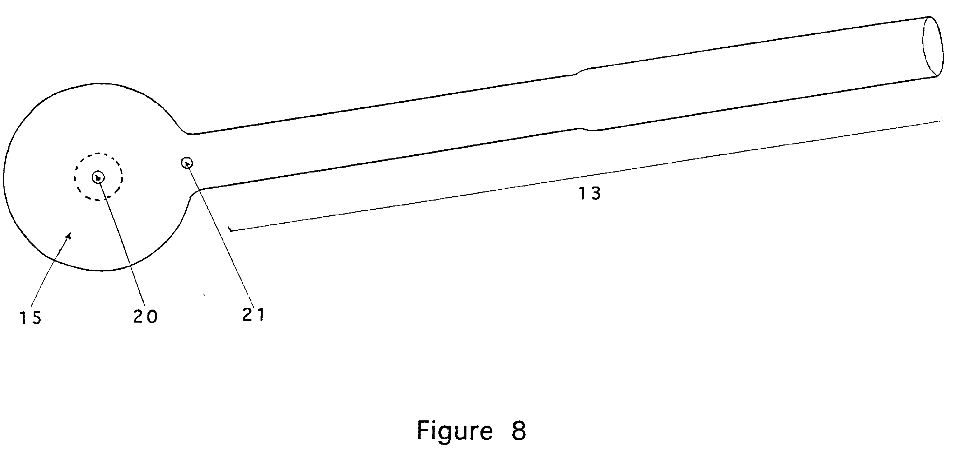

La figure 8 représente le bras (2) en position « sommeil », en vue latérale externe.

Le bras (2) comporte :
- une tige (13) sur laquelle s'engage le tube (4)
- un cylindre (14) destiné à s'engager dans le logement (23) de la barre (6)
- un tambour (15).

La tige (13) comprend trois parties :
- une partie extrême (16) destinée à s'engager dans le tube (4). Le diamètre externe de la partie (16) est légèrement inférieur au diamètre interne du tube (4).
- une partie moyenne (17) de diamètre externe légèrement inférieur au diamètre externe de la partie (16).
- une partie interne (19) se raccordant au tambour (15).

La vis de blocage (38) du tube (4) exerce sa pression sur la partie moyenne (17) de la tige (13). Le fait que le diamètre de la partie (17) soit légèrement inférieur au diamètre de la partie (16) permet un meilleur blocage du tube (4) par la vis de blocage (38). La limite entre les parties (16) et (17) est formée par le rebord (18). Le rebord ((18) constitue une butée sur laquelle peut s'arrêter la vis de blocage (38), lorsque le tube (4) coulisse le long de la tige (13).

La partie (19) est légèrement courbe, ce qui donne à la tige (13) une orientation vers l'extérieur : en position « sommeil », l'angle entre l'axe de la tige (13) et l'axe longitudinal du véhicule est sensiblement de 15 degrés. Cette légère orientation vers l'extérieur, qui est représentée sur la figure 7, est prévue pour s'adapter à la position naturelle de la tête du passager qui sommeille, position qui comporte une légère rotation de la tête autour de l'axe atlas-bregma. La partie (19) est percée d'un orifice (21) dans lequel se loge la cheville (36).Le tambour (15) est solidaire de la tige (13) et du cylindre (14). Le tambour (15) et le cylindre (14) sont percés d'un orifice cylindrique (20). L'orifice (20) laisse passage à la vis (25).

### Description du dispositif d'articulation (3) entre le bras (2) et la barre (6) :

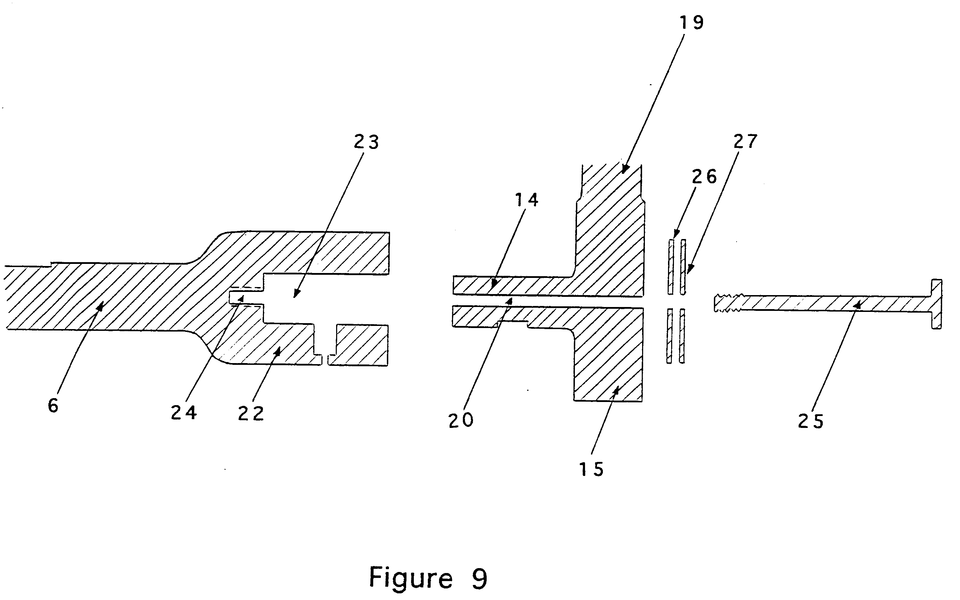

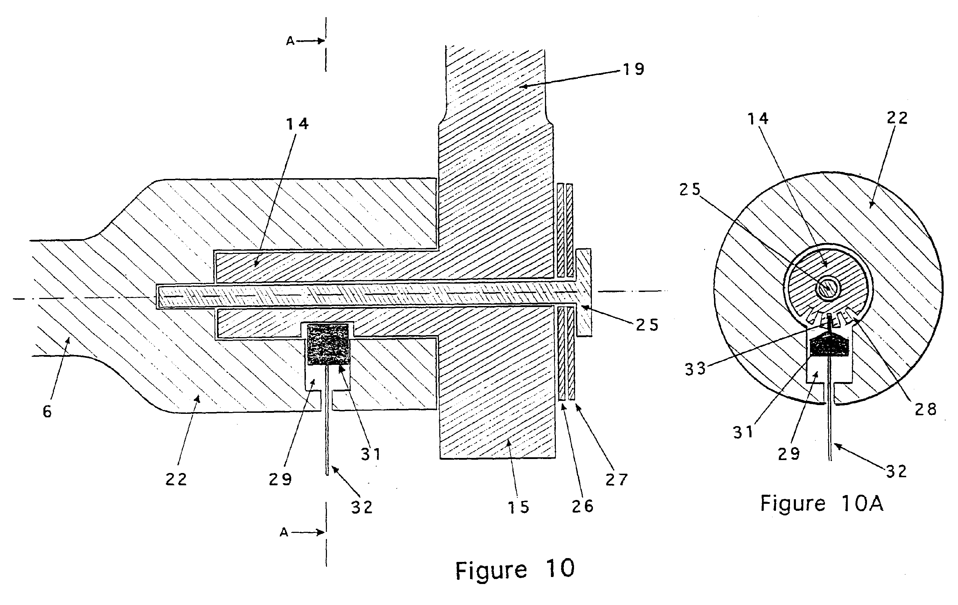

L'articulation (3) est pourvue d'un dispositif de blocage et de déblocage de la rotation. La figure 9 représente, en coupe verticale éclatée, un exemple de réalisation du dispositif d'articulation (3) entre le bras (2) et la barre (6). La barre (6) comporte en son extrémité externe un renflement (22). Dans le renflement (22) est percé un orifice cylindrique (23) dans lequel se loge le cylindre (20). Au fond de l'extrémité interne du cylindre (23) est percé un orifice fileté (24). La vis (25) solidarise le bras (2) et la barre (6) en s'engageant à travers les orifices (20) et (24). Deux rondelles (26) et (27) renforcent la stabilité du vissage.

L'articulation (3) comporte un dispositif de blocage et de déblocage de la rotation. A titre d'exemple, un dispositif de blocage de la rotation est représenté sur la figure (10). Des crans radiaux (28) sont disposés à la partie inférieure du cylindre (14). Un logement cylindrique (29) à axe vertical est creusé dans la partie inférieure du renflement (22). Le logement (29) communique avec l'orifice (23). Dans le logement (29) est disposé un ressort hélicoïdal de compression (30), surmonté de la pièce (31).

La pièce (31) peut coulisser dans le logement (29) vers le haut sous l'action du ressort (30) et vers le bas sous l'action de la tirette (32). La pièce (31) comporte à sa partie supérieure un taquet (33), lequel taquet est, sous l'effet du ressort (30), encastré dans un des crans (28).

Lorsque le passager tire sur la tirette (32), le taquet (33) sort de l'un des crans (28), ce qui permet la rotation du tambour (15). Lorsque le passager relâche la traction sur la tirette (32), le taquet (33), sous l'effet du ressort (30), s'encastre dans un des crans (28) et bloque ainsi la rotation.

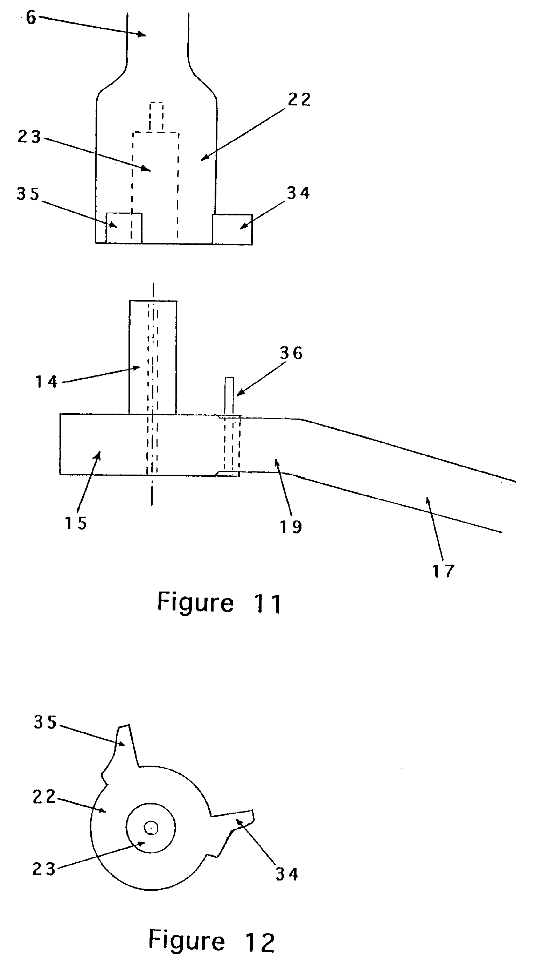

L'articulation (3) comporte en outre un dispositif de butées limitant l'amplitude de la rotation. La figure 11 représente le dit dispositif de butées, en vue supérieure éclatée. La cheville (36) est fixée dans l'orifice (21) du bras (2). Sur le renflement (22) sont disposés deux ergots (34) et (35). Les ergots (34) et (35) servent de butées aux déplacements de la cheville (36) et limitent de ce fait l'amplitude de la rotation du bras(2). L'ergot (35) détermine la position-limite du bras (2) dans la position « éveil ». L'ergot (34) détermine la position -limite du bras (2) dans la position « sommeil ». La figure 12 représente le renflement (22) de la barre (6), ainsi que les butées (34) et (35), en vue latérale externe.

Le dispositif d'articulation (3) peut aussi être réalisé au moyen d'une articulation à rotule.

### Description du tube coulissant et tournant (4) :

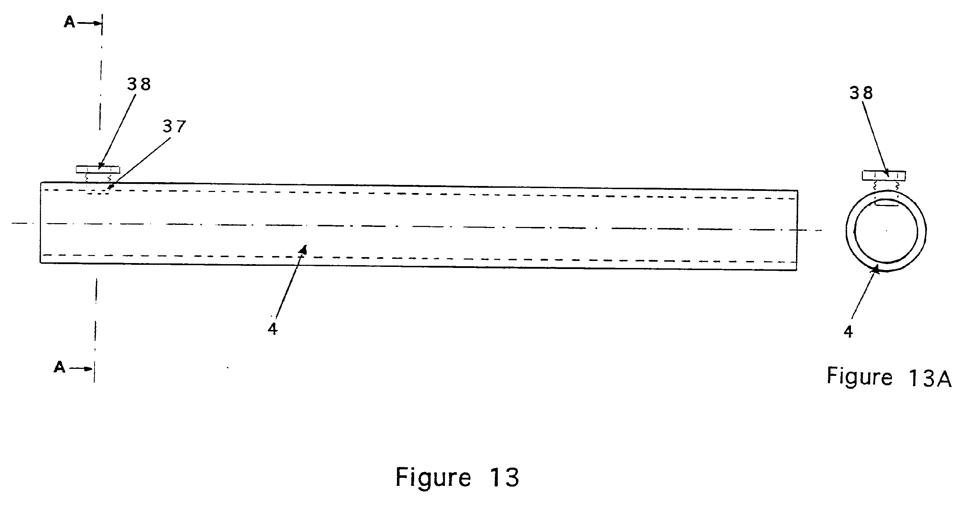

La figure 13 représente le tube coulissant et tournant (4). Le tube (4) peut coulisser le long de la tige (13) et tourner autour de la tige (13). Un dispositif de blocage et de déblocage de la rotation et de la translation permet de fixer le tube (4) dans la position choisie. Selon un mode de réalisation possible du dit dispositif de blocage et de déblocage, le tube (4) comporte un orifice fileté (37) dans lequel est vissée la vis de blocage (38). En position de blocage, la vis (38) solidarise la tige (13) et le tube (4).

### Description de la surface d'appui (5) :

La surface d'appui est constituée :
- d'une surface centrale (39)
- d'un rebord (40) qui, en position « sommeil », est antérieur
- d'un rebord (41) qui, en position « sommeil », est inférieur.

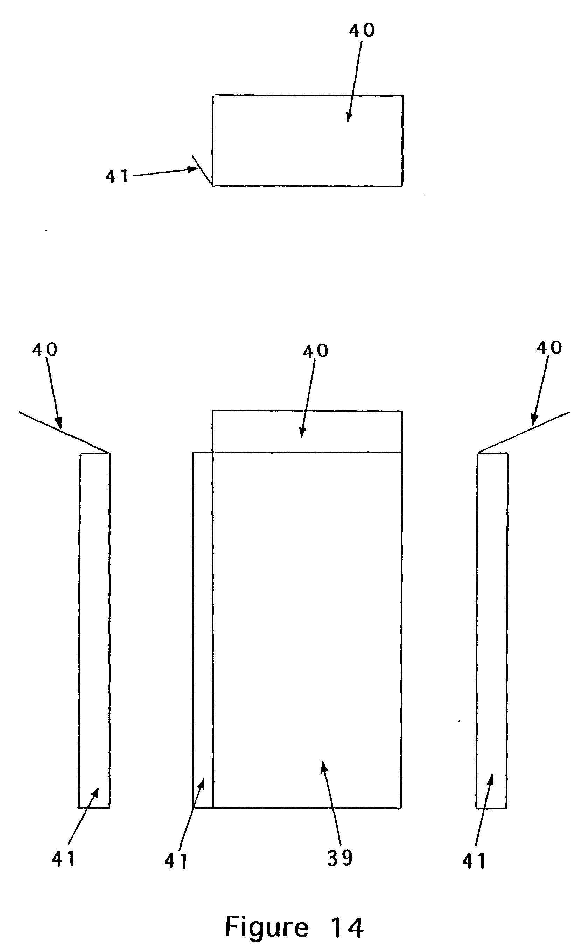

La figure 14 représente la surface d'appui (5). En position « sommeil », le rebord (40) est antérieur : il sert d'appuie-front, il empêche la tête du passager de glisser vers l'avant. En position « sommeil », le rebord (41) est inférieur : il empêche la tête du passager de glisser vers le bas. La surface centrale (39) constitue l'appui principal. En position « sommeil », la surface (39) est latérale par rapport au passager. La surface d'appui (5) est solidaire du tube (4). Le tube (4) peut coulisser par translation le long de la tige (13) du bras (2), ce qui permet de régler en position « sommeil» la distance entre la surface d'appui (5) et le dispositif de fixation (1). Le tube (4) peut tourner par rotation autour de la tige (13) du bras (2), ce qui permet de régler, en position « sommeil », l'inclinaison de la surface (39) et donc de la surface (5). Cette possibilité de réglage de l'inclinaison de la surface (5) est caractéristique de l'invention.

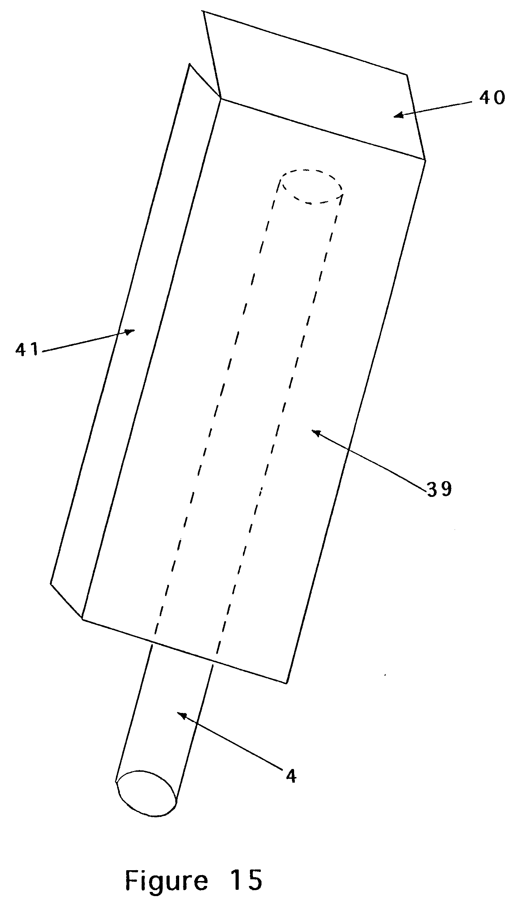

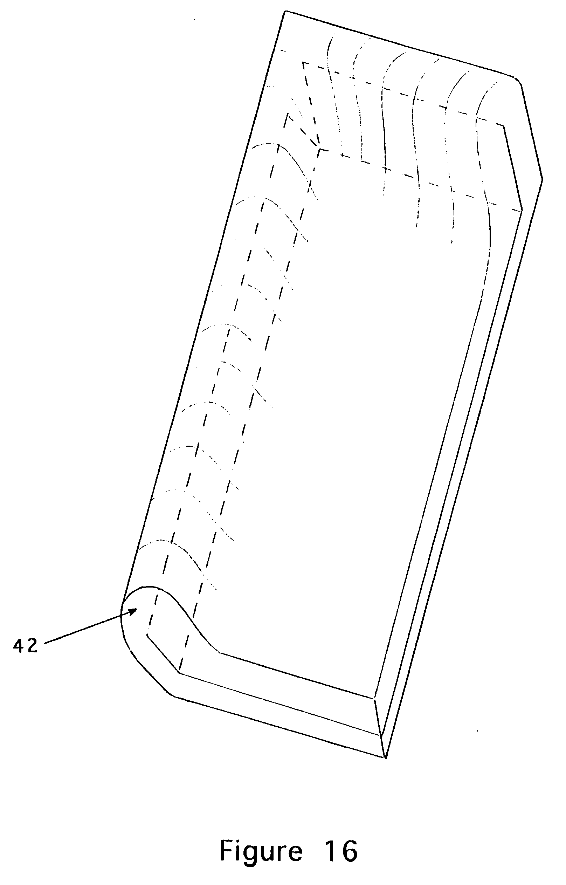

La vis de blocage (38) permet de solidariser le tube (4) et la tige (13) du bras (2) dans la position choisie. La figure 15 montre une vue en perspective de la surface d'appui (5) et du tube (4). La surface d'appui (5) est recouverte d'un matelassage (42). La figure 16 représente une vue en perspective de la surface d'appui (5) et du matelassage (42). Selon l'invention, le tube (4) peut tourner autour du bras (2), ce qui permet au passager de régler la valeur de l'angle C. Sur les appuie-têtes latéraux escamotables connus, l'angle C est égal à zéro. Selon l'invention, l'angle C est réglable de 0 à 90 degrés, ce qui permet une meilleure adaptation de l'appuie-tempe à la position de la tête du passager qui sommeille.

## Revendications

1. Appuie-tête latéral pour siège de passager, comportant :
- un dispositif de fixation au dossier ou à l'appui-tête postérieur
- une surface d'appui latérale externe (5)
et pouvant être utilisé en deux positions :
- une position escamotée, dénommée «éveil », dans laquelle la surface (5) est disposée sensiblement verticalement et à l'extérieur du siège
- une position fonctionnelle, dénommée « sommeil », dans laquelle la surface (5) soutient latéralement la tête du passager,
caractérisé en ce que dans la position « sommeil », l'angle « C » déterminant l'inclinaison de la partie centrale (39) de la surface d'appui (5) peut être réglé entre C=0 et C=90 degrés, l'angle C étant défini comme l'angle entre l'axe longitudinal du dossier et la droite D2, la droite D2 étant définie comme l'intersection du prolongement du plan du dossier avec le prolongement du plan moyen de la partie centrale (39).

2. Appuie-tête selon la revendication 1, caractérisé en ce que la surface d'appui latérale externe (5) présente un rebord (40) qui en position « sommeil » est antérieur et qui en position « sommeil » empêche le glissement de la tête du passager vers l'avant.

3. Appuie-tête selon la revendication 1 ou la revendication 2, caractérisé en ce que la surface d'appui latérale externe (5) présente un rebord (41) qui en position
« sommeil» est inférieur et qui en position « sommeil » empêche le glissement de la tête du passager vers le bas.

4. Appuie-tête selon l'une quelconque des revendications précédentes, caractérisé en ce qu'il comporte un moyen de régler, en position « sommeil », l'angle entre le bras (2) supportant la surface d'appui latérale externe (5) et le plan horizontal.

5. Appuie-tête selon l'une quelconque des revendications précédentes, pouvant coulisser par translation, caractérisé en ce qu'il comporte un dispositif de blocage et de déblocage de la translation du tube (4) le long de la tige (13) du bras (2).

6. Appuie-tête selon l'une quelconque des revendications précédentes, caractérisé en ce que le tube (4) peut tourner par rotation autour de la tige (13) du bras (2) et caractérisé en ce qu'il comporte un dispositif de blocage et de déblocage de la rotation du tube (4) autour de la tige (13).

7. Appuie-tête selon la revendication 5 ou la revendication 6, caractérisé en ce que le dispositif de blocage de la translation ou de la rotation du tube (4) par rapport à la tige (13) est constitué par une vis (38) vissable et dévissable dans l'orifice fileté (37) du tube (4), la dite vis (38) venant en position de blocage buter sur la partie (17) de la tige (13).

8. Appuie-tête selon l'une quelconque des revendications 5 à 7, caractérisé en ce que le diamètre transversal de la partie moyenne (17) de la tige (13) est légèrement inférieur au diamètre transversal de la partie extrême (16) de la tige (13) et caractérisé en ce que le rebord (18), formé par la limite entre les parties (16) et (17), constitue une butée sur laquelle peut s'arrêter la vis (38) lorsque le tube (4) coulisse le long de la tige (13).

9. Appuie-tête selon la revendication 4, comportant un dispositif de blocage et de déblocage de la rotation de l'articulation (3), caractérisé en ce que le dit dispositif comporte :
- un cylindre (14) pourvu de crans radiaux (28)
- une pièce mobile (31) pouvant coulisser dans le logement (29) sous l'action de la tirette (32) et du ressort (30), la dite pièce comportant à sa partie supérieure un taquet (33) qui, en position de blocage de rotation, est encastré dans l'un des crans (28).

10. Appuie-tête selon la revendication 4, comportant un dispositif limitant l'amplitude de la rotation du bras (2), caractérisé en ce que le dit dispositif comporte une cheville (36) fixée dans l'orifice (21) du bras (2) et caractérisé en ce que les déplacements de la dite cheville sont limités par deux butées (34) et (35) disposées sur le renflement (22) de la barre(6) .
